# EUROPEAN PATENT APPLICATION

(11) **EP 1 304 238 A1**
(43) Date of publication of application: **23.04.2003**
(21) Application number: 01124309.4
(22) Date of filing: 19.10.2001
(51) Int. Cl.: B60B 1/04, B60B 5/02

(54) **Composite spoke, particularly for wheels of cycles, motorcycles, and the like**

(71) Applicant: B.C. & Sons Trading Ltd., Torquay, Devon TQ1 1DE (GB)
(72) Inventor: Cliff, Peter Brian Maurice, Torquay TQ2 6PW (GB)
(74) Representative: Modiano, Guido, Dr.-Ing.

(57) **Abstract**

A composite spoke particularly for wheels of cycles, motorcycles and the like, comprising an elongated body (2) that has, at its ends, means for connection respectively to the hub and to the rim. The elongated body (2) is constituted by a single multifilament yarn made of high-strength fiber arranged inside a high-tenacity braided sheath (2b) and arranged along the length of the elongated body. The elongated body is incorporated in a flexible matrix of plastic material.

## Description

The present invention relates to a composite spoke, particularly for wheels of cycles, motorcycles, and the like.

It is known that the wheels of cycles and motorcycles are usually provided by means of steel spokes that are tensioned between the hub and the rim of the wheel.

Steel spokes have the drawback of being relatively heavy and of not always allowing to obtain a streamlined shape that reduces wind impact.

Attempts to solve the problem by using carbon fibers to manufacture the spoke have not yielded satisfactory results, since the spokes were found to be particularly fragile and also caused breakages that produced sharp points that were particularly dangerous for users; accordingly, these solutions have been abandoned completely.

The aim of the present invention is to solve the above mentioned problem by providing a composite spoke, particularly for wheels of cycles, motorcycles, and the like, which is substantially flexible so as to remain intact in case of breakage without causing potential danger to users.

Within this aim, a particular object of the invention is to provide a spoke that has a much lower mass than steel spokes and can be obtained with streamlined contours and with any shape deemed appropriate.

Another object of the present invention is to provide a spoke that while having a considerably improved structure can be interchangeable with the spokes currently in use.

Another object of the present invention is to provide a spoke that by virtue of its particular constructive characteristics is capable of giving the greatest assurances of reliability and safety in use.

Another object of the present invention is to provide a composite spoke particularly for wheels of cycles, motorcycles and the like that can be easily obtained starting from commonly commercially available elements and materials and is furthermore competitive from a purely economic point of view.

This aim and these and other objects that will become better apparent hereinafter are achieved by a composite spoke particularly for wheels of cycles, motorcycles and the like, according to the invention, which comprises an elongated body that has, at its ends, means for connection respectively to the hub and to the rim, characterized in that said elongated body is constituted by a single multifilament yarn made of high-strength, high-tenacity fiber arranged along the length of said elongated body and incorporated in a flexible matrix of plastic material.

Further characteristics and advantages of the invention will become better apparent from the description of some preferred but not exclusive embodiments of a composite spoke, illustrated only by way of non-limitative example in the accompanying drawings, wherein:
Figure 1 is a schematic view of a spoke with an eye;
Figure 2 is a sectional view, taken along the line II-II of Figure 1;
Figure 3 is an end for connection to the hub;
Figure 4 is a schematic view of a coupling provided on the composite yarn;
Figure 5 is a view of the composition of the elongated body;
Figure 6 is a schematic view of a single spoke;
Figure 7 is a view of a double spoke.

With reference to the above figures, the composite spoke particularly for wheels of cycles, motorcycles and the like, generally designated by the reference numeral 1, comprises an elongated body 2 that has, at its ends, means for connection respectively to the hub and to the rim of the wheel.

The particular characteristic of the invention is constituted by the fact that the elongated body 2 is provided by means of a single multifilament yarn of high-strength fiber, so as to provide a unit that is particularly resistant to traction, said yarn being made of carbon fibers.

Around the central core 2a, constituted by the carbon fibers, there is a braided covering sheath 2b obtained with an aramid fiber or the like, which gives good tenacity so that any impacts or impulsive stresses do not cause breakage.

The fiber part is advantageously incorporated in a plastic matrix that can be thermoplastic or thermosetting, without altering the concept that the elongated body 2 must have a certain flexibility.

At its ends, the elongated body 2 is provided with means for connection to the hub and to the rim that can be of various kinds; thus, for example, it is possible to provide a metal eye 10 shaped for example like a teardrop, around which the multifilament yarn is wound so as to incorporate the eye, which can be connected by means of a tension coupling and the like in order to provide the connections to the rim or hub.

The eye is surrounded by the multifilament yarn, which is placed inside a reinforcement 11 made of plastics.

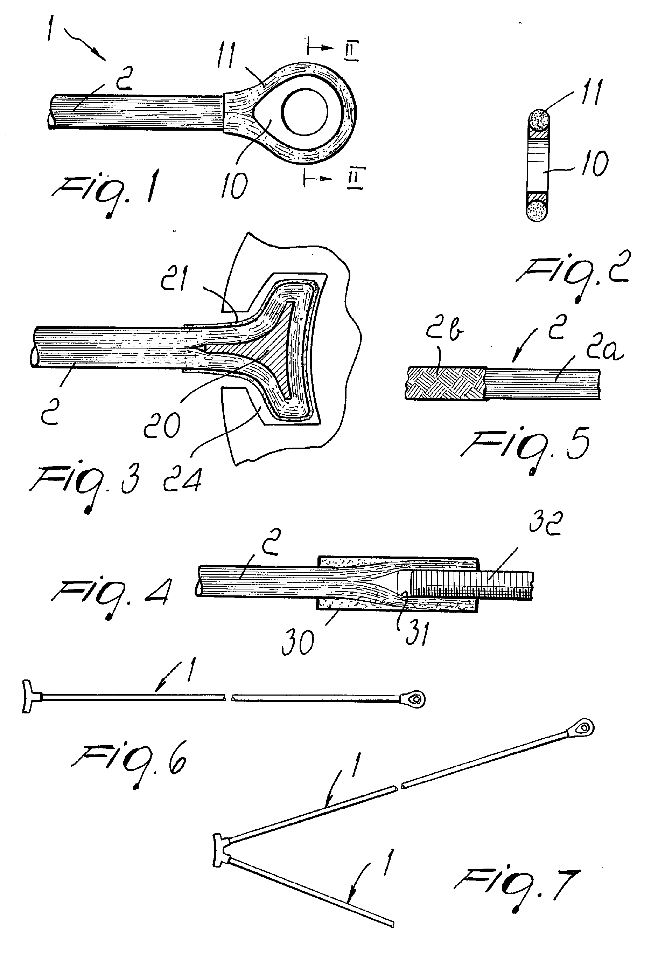

As shown in Figure 3, it is possible to provide a contoured insert 20 that is retained by the multifilament yarn that wraps around it, so as to provide a contact foot that is arranged in a plastic sheath 21 that enters a recess 24 that can be provided in the hub or in the rim.

It is of course always possible to provide, at the other end of the elongated body 2, a tension element so as to obtain the typical traction that has to be applied to the spoke.

Figure 4 illustrates a coupling that can be fitted directly on the multifilament yarn; in this case, at the end of the multifilament yarn, which is generally designated by the reference numeral 2, it is possible to overmold a bush 30 that forms inside it a threaded seat 31 for the connection of a threaded pivot 32 that acts as a tension element, for example, in combination with the conventional bush provided on the rims of a cycle or motorcycle.

The above described structure can be used to provide a single spoke, as shown in Figure 5, or optionally a double spoke, as shown schematically in Figure 6, in which there is a double coupling to the hub from which two single spokes 1 for connection to the rim protrude.

The spoke can be fixed to the rim and to the central hub in various manners, without altering the principle that at least one end must be provided with screw-type tensioning means for the correct tensioning of the elongated body 2 that constitutes the spoke.

From the above description it is thus evident that the invention achieves the proposed aim and objects and in particular the fact is stressed that a spoke is provided which, being obtained by means of a single yarn of carbon fiber, aramid fiber or the like, is not fragile but is instead particularly flexible and tough, so that it does not break even in the presence of stresses and in any case does not create, if any breakage should occur, particularly dangerous rigid sharp points.

The invention thus conceived is susceptible of numerous modifications and variations, all of which are within the scope of the inventive concept.

All the details may furthermore be replaced with other technically equivalent elements.

In practice, the materials employed, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A composite spoke (1) particularly for wheels of cycles, motorcycles and the like, comprising an elongated body (2) that has, at its ends, means (10,20) for connection respectively to the hub and to the rim, **characterized in that** said elongated body (2) is constituted by a single multifilament yarn (2a) made of high-strength fiber arranged inside a high-tenacity braided sheath (2b) and arranged along the length of said elongated body, said elongated body being incorporated in a flexible matrix of plastic material.

2. The spoke according to claim 1, **characterized in that** said single multifilament thread is made of carbon fibers.

3. The spoke according to the preceding claims, **characterized in that** said braided sheath (2b) is made of aramid fiber.

4. The spoke according to one or more of the preceding claims, **characterized in that** said elongated body (2) is substantially flexible.

5. The spoke according to one or more of the preceding claims, **characterized in that** said connection means comprise a metal eye (10) around which said single multifilament yarn winds in order to incorporate said eye, a tension coupling for connection to the hub and/or to the rim being associable with said eye.

6. The spoke according to one or more of the preceding claims, **characterized in that** said multifilament yarn that surrounds said eye (10) is incorporated inside a plastic reinforcement (11).

7. The spoke according to one or more of the preceding claims, **characterized in that** said connection means comprise a shaped insert (20) that is retained by said single multifilament yarn in order to provide a contact foot that is arranged in a plastic sheath (21) that can be inserted in a complementarily shaped recess (24) formed in the hub and/or in the rim.

8. The spoke according to one or more of the preceding claims, **characterized in that** it comprises, on said multifilament yarn, an overmolded bush (30) that forms a threaded seat (31) for connection engagement with a threaded pivot (32) suitable to act as a tension element.

9. The spoke according to one or more of the preceding claims, **characterized in that** it comprises a double spoke that has a body for coupling to the hub from which two individual spokes (1) connectable to the rim protrude.
